# EUROPEAN PATENT APPLICATION

(11) **EP 1 225 421 A2**
(43) Date of publication of application: **24.07.2002**
(21) Application number: 02001316.5
(22) Date of filing: 18.01.2002
(51) Int. Cl.: G01B 11/25

(54) **Holder for an object to be optically measured**

(30) Priority: 18.01.2001 DE 10102115
(71) Applicant: Hint- ELs GmbH, 64347 Griesheim (DE)
(72) Inventor: Hintersehr, Josef, 64347 Griesheim (DE)
(74) Representative: Zinngrebe, Horst, Dr.rer.nat.

(57) **Abstract**

The invention describes a holder for an object, for example a mandibular model or similar dental model, or a precious stone or the like, which is secured on a receiving plate with a coupling pin, in which holder, to make positioning easier, the coupling pin is coupled to a coupling member having reference elements, and the receiving plate is provided with mating reference elements which are intended to interact in a reproducible and defined position when the receiving plate is mounted on the holder, and the coupling member can swivel relative to the coupling pin about a first axis perpendicular to the axis of the coupling pin.

## Description

The invention relates to a holder for an object, for example a dental model, which is secured on a receiving plate with a coupling pin.

In the contact-free, optical measurement of the teeth of a mandibular model in accordance with the method known from the specification DE-44 16 108-A1, it is important for the model to be placed on a receiving plate at such an orientation or inclination that, when illuminated from above, there are no shadow areas, that is to say all the parts of the teeth are illuminated. This positioning of the model on the receiving plate has hitherto been done using a deformable cement, which procedure is very complicated and time-consuming. The invention has the aim of making easier the positioning of an object, in particular of said type.

For this purpose, in the holder according to the invention mentioned at the outset, the coupling pin is coupled to a coupling member having reference elements, and the receiving plate is provided with mating reference elements which are intended to interact in a reproducible and defined position when the receiving plate is mounted on the holder, and the coupling member can swivel relative to the coupling pin about a first axis perpendicular to the axis of the coupling pin. The invention affords the advantage that the object need only be applied at approximately the correct position on the receiving plate, and that the exact position of the object can be easily found by swiveling the receiving plate connected to the coupling member.

The coupling member can expediently also be rotated about a second axis perpendicular to the receiving plate connected to the coupling member. This further extends the adjustment possibilities of the object. The first axis is preferably offset laterally in relation to the axis of the coupling pin and expediently extends above the coupling member approximately through the object when this is connected to the coupling member.

In an advantageous embodiment of the invention, there is secured on the coupling pin, and extending substantially transverse to its axis, a swivel table which has cylinder-jacket-shaped guide surfaces and relative to which a rocker-like intermediate piece bearing the coupling member can swivel, which intermediate piece has complementary guide surfaces interacting with the guide. It is recommended that the coupling member be connected to the intermediate piece via a pivot bearing. If it is sufficient to permit only a sequence of discrete angle steps in order to pivot the coupling member, it is expedient for the pivot bearing to have a plurality of locking positions distributed uniformly about its circumference for example.

In order to ensure that the receiving plate is mounted on the coupling member always at the same orientation relative to the coupling member, a design is preferred in which the reference elements have a different shape and the mating reference elements likewise have correspondingly different shapes.

In addition, in a further advantageous refinement of the invention, a preferably magnetic retaining device is provided which releasably secures the receiving plate placed on the coupling member. This retaining device can include one or more permanent magnets, which are fitted for example in the coupling member. It is expedient for a permanent magnet, which can have a central bore running through it, to be placed in the center of the pivot bearing.

Preferred embodiments of the invention are further set out in the dependent claims. An example of a preferred application of the invention is the measuring of a mandibular model or similar dental model, or of a precious stone or similar items of jewelry. The invention is described in more detail below on the basis of an illustrative embodiment and with reference to the attached drawing, in which:
Fig. 1 shows an exploded perspective representation of a three-part holder;

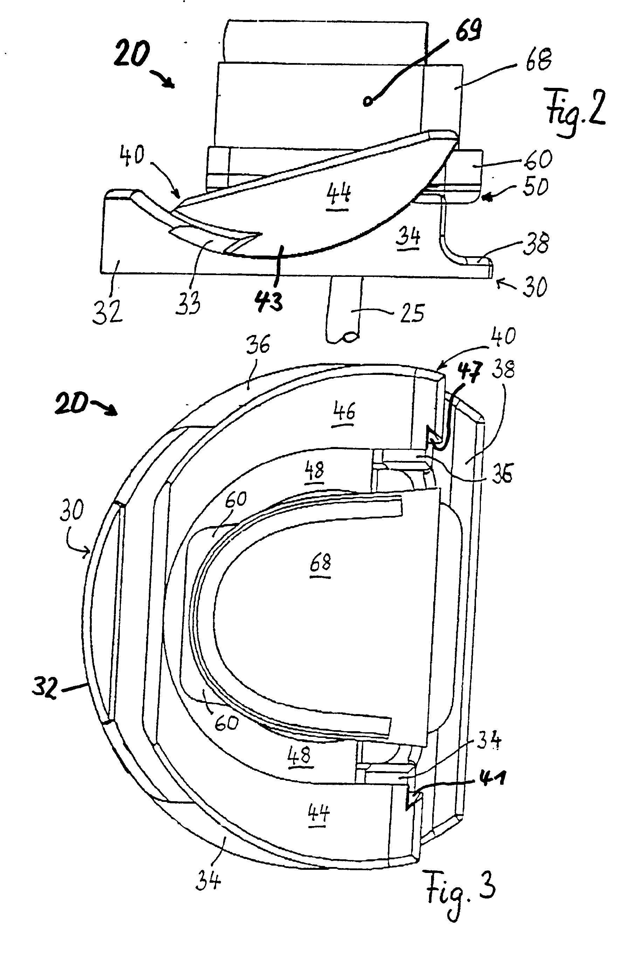

Fig. 2 shows a diagrammatic side view of the holder with dental model;
Fig. 3 shows a plan view of the assembled holder;
Fig. 4 shows a diagrammatic representation of an optical measuring device for the dental model in which the holder according to Figures 1 through 3 can be used.

A device permitting optical measurement of a mandibular model in accordance with the method described in German laid-open specification 44 16 108 is shown in Fig. 4. Rising vertically from a solid plate 1 is a column 2 which, at the upper free end, supports a projector 3. A recording camera, for example in the form of a CCD camera 5, is suspended on an angled bracket 4 secured to the plate 1, and its optical axis 6 (also called the z axis) is perpendicular to the plane top surface 7 of a large round turntable 8 mounted in the plate 1 and extends through the center of the top surface 7 which is round in the shown embodiment of the invention. The projector 3 emits light modulated in lattice form along a projection axis (y axis) 9 which intersects the z axis 6 above the top surface 7 approximately at the center of the object 14 to be measured, at a projection angle α of approximately 30°. A stand 10 is mounted excentrically on the top surface 7, and a small turntable 11 is secured on a top surface 12 of the stand 10. The surface 12 extends perpendicularly to the y axis and supports a holder 20 for the object 14.

The three-part holder 20 has a base part 30, an intermediate piece 40 and a coupling member 50 onto which a receiving plate 60 may be mounted in a predetermined orientation. The mandibular model 68 is fixedly secured to the receiving plate 60.

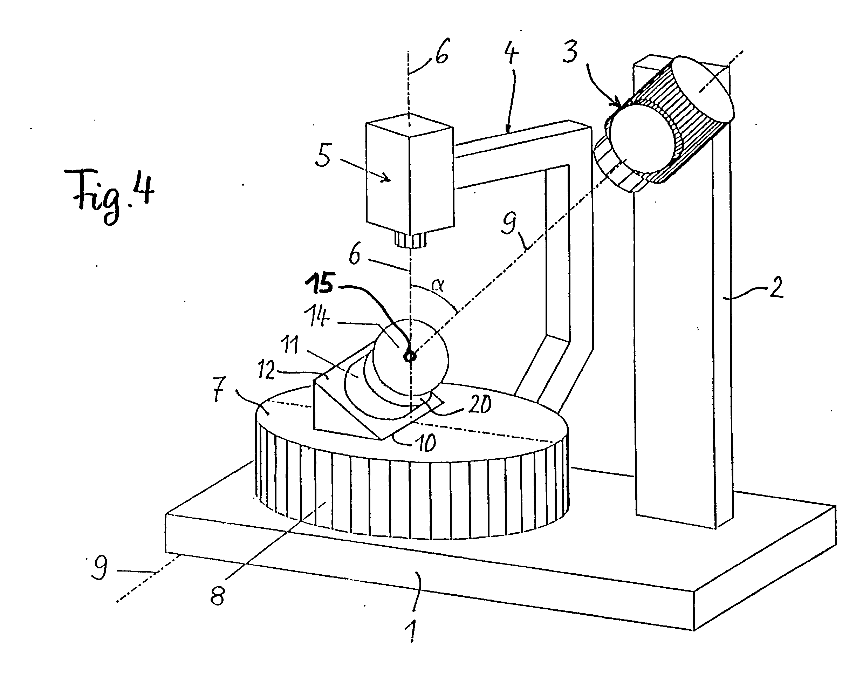

A solid coupling pin 25 projects from the underside of the base part 30. The coupling pin 25 may be introduced into a central opening 15 in the small turntable 11 and may be locked therein by a not shown set screw or similar means. In plan view (Fig. 3) the base part 30 has an outer contour in the shape of an arc of a circle and comprises a substantially C-shaped body 32 ending in a first leg 34 and in an opposing second leg 36. The free ends of the legs 34, 36 are connected by a crosspiece 38.

The upper surface of leg 34 is formed to a smooth and curved first guide surface 33 which runs upwardly close to the free end of the leg 34 and is lowered at the transition of the leg 34 into the body 32. A key groove 31 is formed from an upright rib 39 which extends along the inner rim of the guide surface 33 and, taken lengthwise, has the same curvature as the guide surface 33.

The upper surface of leg 36 is formed to a smooth and curved second guide surface 35 the extension and form of which correspond closely to those of the first guide surface 33. Taken geometrically, both guide surfaces 33 and 35 are portions of one cylinder jacket the axis of which runs approximately through the center 69 of the mandibular model 68 when it is properly positioned on the coupling member 50, and transversely to the axis of pin 25.

A second key groove similar to the first key groove 31 accompanies the guide surface 35 along the inner rim thereof which is formed from an upright rib 37.

The intermediate plate 40 has a central support plate 48 which is surrounded at opposite lateral sides thereof by a first edge piece 44 and a second edge piece 46. The outer contour of the intermediate plate 40 follows closely the corresponding outer contour of body 32 and legs 34, 36. The lower portion of edge piece 44 is formed to a runner 43 which is adapted to the form of the first guide surface 33. The inner margin of runner 43 has an elongated V-shaped groove 41 which may cooperate with first key groove 31 such that when the upper flank of groove 31 penetrates groove 41 the edge piece 44 cannot escape from ist abutment to the first guide surface 33.

Similarly, the lower portion of edge piece 46 is formed to a second runner 45 which is adapted to the form of the second guide surface 35. Also the inner margin of runner 45 has an elongated V-shaped groove 47 which may cooperate with the second key groove such that when the upper flank of that groove penetrates groove 47 the edge piece 46 cannot escape its contact to the second guide surface 35.

The thus far explained structures of legs 34, 36 and of edge pieces 44, 46 enables the intermediate plate 40 to rock upon base part 30 about the axis through the center 69 of the model 68 once the runners 43, 45 are inserted in the elongated groove 31 and the corresponding not shown one extending along guide surface 35, respectively. During the rocking or swivelling movement of the intermediate piece 40 relative to the base plate 30 over an angle of approximately 60° to 90° the intermediate piece 40 remains coupled to the base plate 30 because of the cooperation of the mentioned two pairs of grooves. In case the intermediate piece 40 has asumed the desired position relative to the base plate 30 not shown set screws in the legs 34, 36 may be used for locking the intermediate piece 40 in that position.

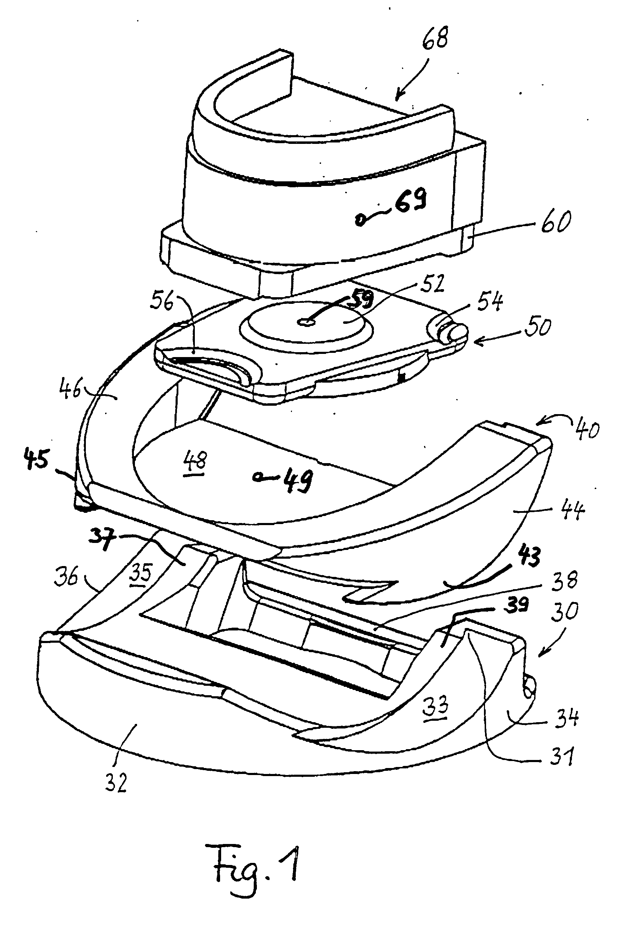

The support plate 48 has a central threaded hole 49 into which a bolt mounted centrally to the coupling member 50 and being threadened only along the end portion thereof, may be screwed. Only the head 59 of such bolt is illustrated in Figur 1. The lateral extension of the plate-like coupling member 50 is smaller than the extension of the space left between the edge pieces 44, 46. Therefore, the coupling member 50 may rotate within that space about the central axis of the bolt. Such axis extends perpendicular to the upper surface of support plate 48.

Of course, a desired rotational position of the coupling member 50 with respect to the intermediate piece 40 may be temporarily fixed by set screws (not shown) which extend laterally through the edge pieces 44, 46, respectively, and engage the opposite lateral sides of the coupling member 50.

Moreover, the coupling member 50 is equipped with at least one permanent magnet 52 by which a metallic magnetisable receiving plate 60 is held on the top surface of the coupling member 50. As shown, the receiving plate 60 has a lateral extension which is substantially not greater than the corresponding extension of the coupling member 50. Further, the coupling member 50 is provided with at least two reference elements 54, 56 of different shapes and preferrably asymmetric arrangement upon the upper surface of the coupling member 50. In the shown embodiment the reference elements 54, 56 have the form of recesses, of which recess 54 is made at one corner of the coupling member 50 while the second recess 56 is formed in a lateral side surface distant to recess 54. Not shown counter reference elements project from the underside of receiving plate 60 the shape and arrangement of which mate which reference elements 54, 56. The purpose of providing reference elements and mating counter reference elements resides in allowing the receiving plate to be fixed to the coupling member 50 in only one precise predetermined orientation with respect to the coupling member 50. Therefore, different forms and shapes may be selected for the reference elements and the cooperating counter reference elements. A mandibular model 68 which is to be inspected has to be glued or otherwise fixedly bonded to the upper surface of the receiving plate 60 which in turn is set upon the coupling member 50 in an exact orientation defined by engangement of the reference elementes with the counter reference elements.

The hole 49 is arranged in the support plate 48 and the mounting of bolt 59 on the coupling member 50 is arranged such that there exists a precise rocking position of the intermediate piece 40 with respect to the base plate 30 wherein the axis of rotation of the coupling member 50, i.e. the axis of bolt 59, is aligned with the axis of pin 25. In all different positions of the intermediate piece 40 the axis of rotation of the coupling member 50 includes an angle with the axis of pin 25. The axis of pin 25 coincides with the projection axis 9 once the base plate 30 is mounted on table 11 by inserting pin 25 into hole 15.

Therefore, by suitable adjustments of the intermediate piece 40 and the coupling member 50 with respect to base plate 30 the model 68 may be placed in such a position in the illuminating light from the projector 3 that the light does not produce any shadow of the model 68 for the camera 5. The model 68 as shown may be replaced by a different model of similar type and again by suitable adjustments of intermediate piece 40 and coupling member 50 a proper shadowless illumination of the new model may be obtained without the need for any correction of the positions of the turntables 8 and 11, respectively. Moreover, should only portions of the model be lit shadowlessly further portions may be brought properly into the illuminating light by simply adjusting the orientations of the intermediate piece 40 and/or the coupling member 50.

While it is presently preferred that the axis through the center 69 of the model 68 about which intermediate piece 40 may swivel, intersects the axis of pin 25 in particular circumstances it may be advantegeous that the axis through center 69 is laterally offset with respect to the axis of pin 25.

## Claims

1. A holder for an object comprising a receiving plate (60) for holding the object (68), the receiving plate having first engagement means, a coupling member (50) having second engagement means (54, 56) for interacting with the first engagement means for releasably mounting the receiving plate (60) to the coupling member (50) in a predetermined precise and reproducible orientation, the coupling member (50) further including (a) coupling means (59) for allowing the coupling member to rotate about a first axis and (b) swivelling means (40) for allowing the coupling member to swivel about a second axis (69) which is perpendicular to the first axis.

2. The holder as claimed in claim 1, **characterised in that** the coupling member (50) is connected to a base plate (30) relative to which the coupling member (50) may rotate and/or swivel.

3. The holder as claimed in claim 1 or 2, **characterised in that** the second axis runs approximately through the centre (69) of the object (68).

4. The holder as claimed in one of the preceding claims **characterised in that** the second axis intersects the first axis.

5. The holder as claimed in one of the claims 1 through 3 **characterised in that** the second axis is laterally offset to the first axis.

6. The holder as claimed in one of the preceding claims **characterised in that** the swivelling means comprise an intermediate piece (40) which is coupled between the base plate (30) an the coupling member (50) and relative to which the coupling member (50) may rotate.

7. The holder as claimed in claim 6 **characterised in that** the base plate comprises at least one guide surface (33, 35) which is curved around the second axis, and that the intermediate piece (40) is provided with at least one runner (43, 45) having a surface which is curved like the guide surface (33, 35) for engagement with the guide surface such that the intermediate piece (40) may swivel relative to the base plate (30) along the guide surface.

8. The holder as claimed in claim 7 **characterised in that** means are provided on the intermediate piece and on the base plate which prevent the runners (43, 45) from escaping from the engagement with the guide surface during swivelling.

9. The holder as claimed in claim 8 **characterised in that** the means comprise opposing pairs of cooperating elongated grooves (31; 41, 47) one groove of each pair being provided on the base plate and the other groove of each pair being provided on the runner (43, 45).

10. The holder as claimed in one of the preceding claims **characterised in that** releasable fixing means are provided which allow the coupling member (50) to be fixed in a desired rotational and swivel position.

11. The holder as claimed in claim 10 **characterised in that** the fixing means are set screws some of which extend through the base plate (30) for engaging the intermediate piece (40) for fixing the swivel position thereof, and other set screws extend through the intermediate piece (40) for engagement with the coupling member (50) for fixing the rotational position thereof.

12. The holder as claimed in one of the preceding claims **characterised in that** a mounting pin (25) projects from the base plate (30) opposite to the intermediate piece (40) the axis of which is collinear with the rotational axis of the coupling member (50).

13. The holder as claimed in anyone of the preceding claims **characterised in that** it is adapted to be mounted in a device (2, 3, 4, 5, 7, 11) permitting optical measurement of the object such that the rotational axis of the coupling element (50) is directed along a projection axis (9) of a projector (3) of said device.

14. The holder as claimed in anyone of the preceding claims **characterised in that** the coupling member (50) is provided with a set of reference elements (54, 56) of different shape and arrangement, and that the receiving plate (60) is provided with a set of counter reference elements which may cooperate with the reference elements in such a way that the receiving plate (60) can be releasably mounted to the coupling member (50) in only one precise orientation.

15. The holder as claimed in claim 14 **characterised in that** the reference elements are recesses which are arranged asymmetrically on the coupling member (50).

16. The holder as claimed in anyone of the preceding claims **characterised in that** the receiving plate (60) is magnetically coupled to the coupling member (50).
